Europäisches Patentamt

(19) European Patent Office

Office européen des brevets

(11) Numéro de publication : **0 246 134 B1**

(12) # FASCICULE DE BREVET EUROPEEN

(45) Date de publication du fascicule du brevet :
**14.08.91 Bulletin 91/33**

(51) Int. Cl.$^5$ : **H01G 4/34**

(21) Numéro de dépôt : **87400988.9**

(22) Date de dépôt : **29.04.87**

(54) **Condensateur de précision à ajustement de la capacité nominale.**

(30) Priorité : **13.05.86 FR 8606859**

(43) Date de publication de la demande :
**19.11.87 Bulletin 87/47**

(45) Mention de la délivrance du brevet :
**14.08.91 Bulletin 91/33**

(84) Etats contractants désignés :
**DE GB NL SE**

(56) Documents cités :
**DE-A- 1 938 767
DE-A- 2 747 552
FR-A- 2 374 730
GB-A- 262 272
GB-A- 2 105 909**

(73) Titulaire : **COMPAGNIE EUROPEENNE DE COMPOSANTS ELECTRONIQUES LCC
50, rue Jean -Pierre Timbaud B.P. 301
F-92402 Courbevoie (FR)**

(72) Inventeur : **Hardy, Patrick
THOMSON-CSF SCPI 19, avenue de Messine
F-75008 Paris (FR)**
Inventeur : **Guichard, Serge
THOMSON-CSF SCPI 19, avenue de Messine
F-75008 Paris (FR)**

(74) Mandataire : **Ruellan-Lemonnier, Brigitte et al
THOMSON-CSF SCPI
F-92045 PARIS LA DEFENSE CEDEX 67 (FR)**

EP 0 246 134 B1

**Description**

La présente invention concerne des condensateurs multicouches dont la capacité nominale est ajustée finement pour atteindre des tolérances de 1 % et même de 0,5 %, comme décrit dans le GB-A-262272.

Jusqu'à présent, deux techniques sont utilisées pour obtenir des condensateurs multicouches de haute précision. Le principe est de partir d'un condensateur de valeur trop élevée par rapport à la valeur désirée et de réduire graduellement la capacité jusqu'à la valeur désirée. Selon une première technique, les condensateurs sont percés à partir de l'une de leurs faces d'un trou réalisé par un jet de sable micronisé dirigé perpendiculairement aux couches des condensateurs. Le jet de sable réalise un cône d'usinage profond et plus ou moins ouvert, enlevant la quantité de matière en surplus. Cette opération se fait en mesurant directement la capacité de l'élément au cours de son usinage. Cette technique présente plusieurs inconvénients. Les épaisseurs des couches étant faibles, plusieurs couches actives doivent être attaquées et le trou provoqué dans l'élément doit ensuite être rebouché par un "verre" lequel après cuisson doit permettre au produit fini de conserver toutes ses propriétés diélectriques. Le rebouchage du trou présente certaines difficultés à cause de bulles d'air qui ont tendance à rester au fond du trou. La résistance d'isolement du verre, pris dans un certain nombre de couches actives et donc sous champ, s'écroule.

Selon une seconde technique, on sable manuellement une électrode terminale réalisée en surface de l'élément capacitif par exemple par sérigraphie. Cette opération se fait également en mesurant directement la capacité de l'élément au cours de son usinage. L'élément obtenu est ensuite enrobé complètement dans un verre de protection. Cette technique possède également ses inconvénients. Le procédé comporte une étape manuelle donc longue et coûteuse. L'enrobage de verre est une opération très délicate. Le produit fini accepte mal les variations rapides de température du fait des coefficients de température différents entre le verre et l'ensemble céramique-métal. La tenue en tension à fréquence élevée est mauvaise. La résistance d'isolement est également mauvaise à cause de la porosité des verres employés en couches très épaisses.

Afin de pallier ces inconvénients, l'invention propose un condensateur multicouche réalisé de telle façon que la capacité nominale soit pratiquement atteinte grâce à un certain nombre de couches actives, que cette capacité nominale soit dépassée grâce à une couche supplémentaire déposée sur l'empilement de couches actives et que la capacité nominale soit ajustée par sciage de l'armature déposée sur la couche supplémentaire.

L'invention a donc pour objet un condensateur multicouche de précision constitué par un empilement alterné de couches diélectriques et d'armatures conductrices, les armaures impaires étant connectées à l'une des électrodes du condensateur, les armatures paires étant connectées à l'autre électrode du condensateur, une couche diélectrique comprise entre deux armatures successives définissant un élément capacitif élémentaire, l'empilement comprenant une première partie formée d'éléments capacitifs élémentaires et constituant une capacité légèrement inférieure à la capacité nominale désirée, et une seconde partie complétant l'empilement et permettant à l'ensemble de l'empilement de dépasser légèrement la capacité nominale désirée, cette seconde partie comprenant une seule couche diélectrique et son armature ou armature supplémentaire placée du côté externe de l'empilement étant interrompue à une distance donnée de l'électrode à laquelle elle est rattachée, cette distance étant déterminée en fonction de la capacité nominale désirée, caractérisé en ce que l'épaisseur de la couche diélectrique de la seconde partie est supérieur à l'épaisseur du diélectrique d'une couche active.

L'invention sera mieux comprise et d'autres avantages apparaîtront au moyen de la description qui va suivre, donnée à titre non limitatif, et des figures annexées parmi lesquelles :
    – la figure 1 est une vue en coupe d'un condensateur multicouche selon l'art connu,
    – la figure 2 est une vue en coupe d'un condensateur multicouche selon l'invention.

Les condensateurs multicouches sont essentiellement constitués d'un empilement alterné de couches diélectriques, par exemple en céramique, et de couches métalliques appelées armatures. L'empilement ainsi réalisé est de forme sensiblement parallélépipédique et les armatures de même parité sont reliées entre elles par une couche conductrice appelée terminaison et destinée à former l'une des électrodes du condensateur. Ces deux terminaisons du condensateur sont situées sur deux faces latérales opposées du parallélépipède. Suivant les applications envisagées, le condensateur multicouche peut être ainsi utilisé soit en report direct sur un circuit électrique par l'intermédiaire des terminaisons, soit à l'aide de connexions soudées sur les terminaisons.

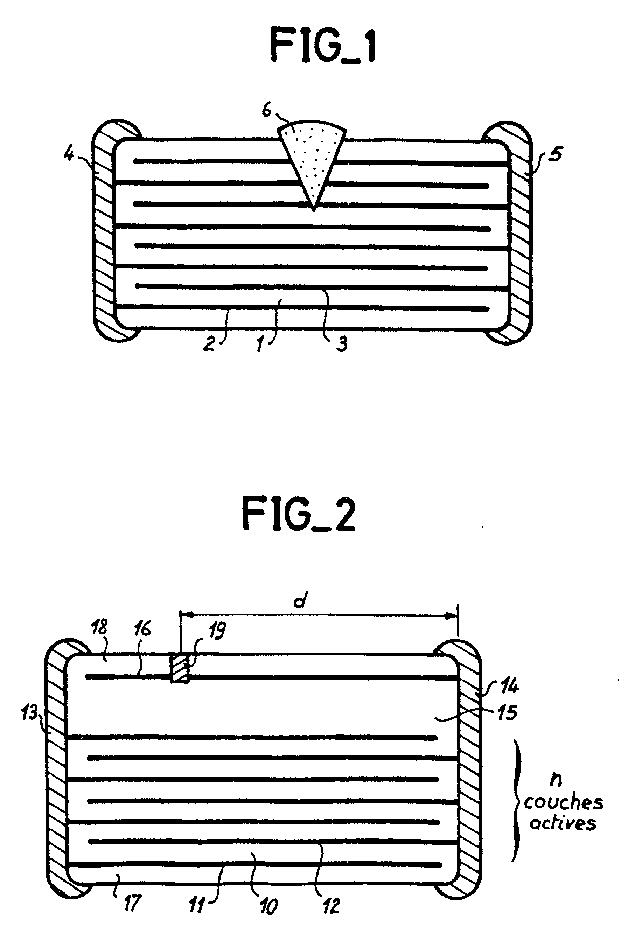

La figure 1 est une vue en coupe d'un condensateur multicouche de précision selon l'art connu. La coupe effectuée permet de voir l'empilement alterné des couches diélectriques 1 et des armatures 2 et 3. Les armatures 2 sont reliées entre elles par la terminaison 4 et les armatures 3 sont reliées entre elles par la terminaison 5. Sur la face supérieure du parallélépipède formant le condensateur, un jet de sable micronisé a permis de pratiquer un cône d'usinage profond. Plusieurs couches actives ont été attaquées et l'opération d'usinage s'est effectuée en mesure directe. Le cône a été rebouché par du verre 6. En plus des inconvénients déjà mentionnés plus haut, on voit que cette coupure provoquée dans certaines couches du condensateur conduit à la formation d'un point de rupture potentiel.

La figure 2 est une vue en coupe, faite dans un plan identique à celui de la figure 1, d'un condensateur multicouche selon l'invention. La coupe permet de voir l'empilement alterné des couches diélectriques 10 et des armatures 11 et 12. Les armaturs 11 sont reliées entre elles par la terminaison 13 et les armatures 12 sont reliées entre elles par les terminaisons 14. L'empilement comprend une première partie formée de n éléments capacitifs élémentaires ou couches actives. Le nombre n de couches actives est tel que l'ensemble présente une capacité légèrement inférieure à la capacité nominale désirée. La capacité ainsi obtenue représente entre 97 et 99 % de la capacité nominale désirée pour le condensateur. L'empilement comprend également une seconde partie formée d'une seule couche diélectrique 15 comprise entre l'une des armatures du jeu d'armatures précédemment cité et une armature 16 dite armature supplémentaire. Cette seconde partie de l'empilement procure un élément capacitif supplémentaire et sa valeur est telle que l'ensemble de l'empilement possède une capacité légèrement supérieure à la capacité nominale désirée.

Il est avantageux, pour des raisons qui seront exposées plus loin, que la capacité de l'élément capacitif supplémentaire soit comprise entre le tiers et le cinquième de la capacité d'une couche active de la première partie de l'empilement. Cela revient à dire que, les couches actives ayant toutes la même épaisseur, l'épaisseur du diélectrique de l'élément capacitif supplémentaire sera de 3 à 5 fois supérieure à l'épaisseur du diélectrique d'une couche active. Le diélectrique de l'élément capacitif supplémentaire sera donc soumis à un champ électrique compris entre le tiers et le cinquième du champ appliqué aux couches actives. La couche diélectrique supplémentaire aura donc moins à souffrir que les autres couches des effets du champ électrique.

Sur la figure 2, on a également représenté les couvercles inférieur 17 et supérieur 18 du condensateur formés, par exemple, de feuilles diélectriques.

Le condensateur ainsi constitué peut être ajusté très précisément par découpe ou sciage de l'armature supplémentaire 16 qui se trouve près de la surface. En effet, on connaît l'épaisseur de diélectrique de l'élément capacitif supplémentaire et l'opération d'ajustement de la capacité nominale se ramène à :
     – une mesure précise de la capacité non ajustée,
     – une découpe, par exemple par un trait de sciage à la meule diamantée, à une distance $d$ de l'extrémité de référence (en l'occurrence la terminaison à laquelle l'armature supplémentaire 16 est rattachée).

La capacité de "correction" apportée par l'élément capacitif supplémentaire à armature découpée peut s'exprimer pour un même format en picofarads par mm de distance $d$. On peut disposer de meules diamantées d'épaisseur descendant jusqu'à 0,05 mm. L'entaille réalisée par cette meule ne pénètre alors que très partiellement dans la couche active. Le matériau isolant 19 utilisé pour reboucher l'entaille (par exemple du verre) ne sera pas dans ce cas sous champ.

L'entaille effectuée ne concerne qu'une seule armature du condensateur. L'épaisseur préférée pour l'élément capacitif supplémentaire (entre 3 et 5 fois l'épaisseur d'une couche active) permet d'obtenir un bon compromis entre l'épaisseur de cet élément supplémentaire et la valeur ajoutée de capacité.

On choisira de préférence, pour ne pas altérer les propriétés du condensateur, un matériau de rebouchage possédant une constante diélectrique du même ordre que celle des couches diélectriques. Si les couches diélectriques sont en céramiques, on peut trouver un verre possédant les propriétés requises.

la découpe de l'armature supplémentaire peut s'effectuer autrement que par sciage, par exemple à l'aide d'un rayon laser dont la longueur d'onde et l'inclinaison sont choisies en fonction du matériau constituant le couvercle 18.

la présente invention présente encore les avantages suivants. La correction, s'effectuant en pF/mm, peut être automatisée sur une machine trois axes. Le dépôt du matériau de rebouchage peut se faire à la seringue et de façon automatique puisque le volume de l'entaille est toujours identique. Les essais effectués ont montré que la tenue aux variations rapides en température, à la chaleur humide, la tenue de la résistance d'isolement sous deux fois la valeur de la tension nominale d'utilisation et en haute fréquence restent excellentes.

L'invention s'applique particulièrement bien à la fabrication de condensateurs de forte ou moyenne puissance, de type I. La capacité nominale peut être ajustée à 1 % ou 0,5 % près.

**Revendications**

1. Condensateur multicouche de précision constitué par un empilement alterné de couches diélectriques (10) et d'armatures conductrices (11, 12), les armatures impaires étant connectées à l'une des électrodes (13, 14) du condensateur, les armatures paires étant connectées à l'autre électrode du condensateur, une couche diélectrique comprise entre deux armatures successives définissant un élément capacitif élémentaire, l'empilement comprenant une première partie formée d'éléments capacitifs élémentaires et constituant une capacité légèrement inférieure à la capacité nominale désirée, et une seconde partie complétant l'empilement et permettant à l'ensemble de l'empilement de dépasser légèrement la capacité nominale désirée, cette seconde partie comprenant une seule couche diélectrique (15) et son armature (16) ou armature supplémentaire placée du côté externe de l'empilement étant interrompue à une distance (d) donnée de l'électrode à laquelle elle est rattachée, cette distance étant déterminée en fonction de la capacité nominale désirée, caractérisé en ce que l'épaisseur de la couche diélectrique de la seconde partie est supérieure à l'épaisseur du diélectrique (10) d'une couche active.

2. Condensateur selon la revendication 1, caractérisé en ce que l'armature supplémentaire (16) est interrompue par une entaille.

3. Condensateur selon la revendication 2, caractérisé en ce que ladite entaille est rebouchée par un matériau isolant (19).

4. Condensateur selon l'une quelconque des revendications 1 à 3, caractérisé en ce que la couche diélectrique (15) de la seconde partie a une épaisseur comprise entre 3 et 5 fois l'épaisseur des autres couches diélectriques (10).

## Patentansprüche

1. Präzisions-Vielschichtkondensator, bestehend aus der abwechselnden Stapelung von dielektrischen Schichten (10) und leitenden Platten (11, 12), wobei die ungeradzahligen Platten an eine der Kondensatorelektroden (13, 14) und die geradzahligen Platten an die andere Kondensatorelektrode angeschlossen sind, und eine zwischen zwei aufeinanderfolgenden Platten liegende dielektrische Schicht ein kapazitives Elementarelement darstellt, wobei der Stapel aus einem ersten von kapazitiven Elementarelementen gebildeten Bereich, der einen knapp unterhalb der gewünschten Nennkapazität liegenden Kapazitätswert aufweist, und aus einem zweiten Bereich besteht, der den Stapel vervollständigt und der Gesamtanordnung eine geringfügig über der Nennkapazität liegende Kapazität verleiht, wobei dieser zweite Bereich nur eine einzige dielektrische Schicht (15) aufweist und ihre Platte (16) oder zusätzliche auf der Außenseite des Stapels liegende Platte in einem bestimmten Abstand (d) von der Elektrode, an die sie angeschlossen ist, unterbrochen ist, wobei dieser Abstand abhängig von der gewünschten Nennkapazität festgelegt ist, dadurch gekennzeichnet, daß die Dicke der dielektrischen Schicht des zweiten Bereichs größer als die Dicke des Dielektrikums (10) einer aktiven Schicht ist.

2. Kondensator nach Anspruch 1, dadurch gekennzeichnet, daß die zusätzliche Platte (17) durch einen Einschnitt unterbrochen ist.

3. Kondensator nach Anspruch 2, dadurch gekennzeichnet, daß der Einschnitt durch ein Isoliermaterial (19) aufgefüllt ist.

4. Kondensator nach einem beliebigen der Ansprüche 1 bis 3, dadurch gekennzeichnet, daß die dielektrische Schicht (15) des zweiten Bereichs eine Dicke zwischen 3 und 5 mal der Dicke der anderen dielektrischen Schichten (10) aufweist.

## Claims

1. A multilayer precision capacitor constituted by an alternating stack of dielectric layers (10) and conducting plates (11, 12), the odd plates being connected to one of the capacitor electrodes (13, 14), while the even plates are connected to the other capacitor electrode, a dielectric layer included between two successive plates defining an elementary capacitor element, the stack being composed of a first portion which is constituted by elementary capacitor elements and defines a capacity slightly exceeding the desired nominal capacity, and of a second portion which completes the stack and allows the entire stack to exceed slightly the desired nominal capacity, this second portion comprising a unique dielectric layer (15) and its plate (16) or additional end plate placed on the outside of the stack being interrupted at a given distance (d) from the electrode to which it is connected, this distance being defined in accordance with the desired nominal capacity, characterized in that the thickness of the dielectric layer of the second portion is greater than the thickness of the dielectric material (10) of an active layer.

2. A capacitor according to claim 1, characterized in that the additional plate (16) is interrupted by a notch.

3. A capacitor according to claim 2, characterized in that said notch is refilled by an insulating material (19).

4. A capacitor according to any one of claims 1 to 3, characterized in that the dielectric layer (15) of the second portion has a thickness between 3 and 5 times the thickness of the other dielectric layers (10).

# FIG_1

# FIG_2

*n couches actives*